# EUROPÄISCHE PATENTANMELDUNG

(11) **EP 2 113 545 A1**
(43) Veröffentlichungstag der Anmeldung: **04.11.2009**
(21) Anmeldenummer: 08155272.1
(22) Anmeldetag: 28.04.2008
(51) Int. Cl.: C09J 151/06, B32B 27/32

(54) **Heissschmelzklebstoffe mit verlängerter Offenzeit**

(71) Anmelder: Sika Technology AG, 6340 Baar (CH)
(72) Erfinder: Paschkowski, Kai, 21635 Jork (DE); Cordes, Mathias, 22525 Hamburg (DE)
(74) Vertreter: Sika Patent Attorneys

(57) **Zusammenfassung**

Die vorliegende Erfindung betrifft Heissschmelzklebstoffzusammensetzungen, welche mindestens ein thermoplastisches, bei 25°C festes silangepfropftes Poly-α-olefin und mindestens ein Weichharz mit einem Schmelzpunkt oder Erweichungspunkt zwischen -10°C und 40°C aufweisen. Diese Heissschmelzklebstoffzusammensetzungen eigenen sich insbesondere als Kaschierklebstoffe und weisen auch in dünnen Schichten eine verlängerte Offenzeit auf, bauen aber trotzdem schnell eine grosse Frühfestigkeit auf und führen zu einem wärmestabilen Klebverbund.

## Beschreibung

### Technisches Gebiet

Die Erfindung betrifft das Gebiet der Heissschmelzklebstoffe insbesondere der Kaschierklebstoffe.

### Stand der Technik

Heissschmelzklebstoffe sind seit langem bekannt und werden als Kaschierklebstoffe eingesetzt. Wenn der geschmolzene Klebstoff in einer dünnen Schicht aufgetragen wird, besteht jedoch das grosse Problem, dass diese Klebstoffe eine geringe Offenzeit aufweisen, d.h. dass der Klebstoff in dünnen Schichten so schnell abkühlt und sich dabei sich so verfestigt, dass der Klebstoff die Oberfläche des Fügepartners nicht mehr benetzt und somit sich kein Klebverbund mehr bilden kann. Dies ist insbesondere der Fall bei Heissschmelzklebstoffen, welche auf amorphen Thermoplasten basieren. Ein weiterer Nachteil dieser Art Heissschmelzklebstoffe ist das Problem, dass die Klebstoffe auch nach der Applikation thermoplastisch sind. Dies führt dazu, dass der Klebstoff in einem Klebverbund beim Erhitzen des Klebverbundes wieder aufschmilzt, wodurch der Verbund bei Belastung zerstört wird.

Polyurethan-Heissschmelzklebstoffe sind reaktive Heissschmelzklebstoffe und werden bevorzugt, weil sie nach der Applikation mit Feuchtigkeit reagieren und vernetzen und sich somit sehr wärmestabile Verklebungen realisieren lassen, die wärmestabil sind. Diese Klebstoffe sind jedoch unmittelbar nach Applikation äusserst weich und bauen ihre Festigkeit erst mit der Zeit auf, d.h. wenn sie vernetzen. Reaktive Polyurethan-Heissschmelzklebstoffe weisen somit in dünnen Schichten zwar eine lange Offenzeit auf, haben aber dass grosse Problem einer geringen Anfangsfestigkeit.

Heissschmelzklebstoffe basierend auf Silangepfropften Poly-α-olefinen sind dem Fachmann zum Beispiel aus US 5,994,747 und DE 40 00 695 A1 bekannt. Diese Klebstoffe weisen sehr interessante Eigenschaften auf, denn einerseits sind diese Heissschmelzklebstoffe ebenfalls reaktive Heissschmelzklebstoffe, wodurch hohe Festigkeit und grosse Wärmestabilität erreicht werden kann. Andererseits ist auch die Anfangsfestigkeit sehr hoch. Allerdings weisen auch diese Klebstoffe in dünnen Schichten eine sehr kurze Offenzeit auf, was ihrer Verwendung als Kaschierklebstoffe ohne eine vorgängige Reaktivierung (Wiederaufschmelzung) bisher abträglich war.

### Darstellung der Erfindung

Die Aufgabe der vorliegenden Erfindung ist es daher, Heissschmelzklebstoffe zur Verfügung zu stellen, welche auch in dünnen Schichten eine verlängerte Offenzeit aufweisen, aber trotzdem schnell eine grosse Frühfestigkeit aufbauen und zu einem wärmestabilen Klebverbund führen.

Überraschenderweise hat sich gezeigt, dass eine Heissschmelzklebstoffzusammensetzung gemäss Anspruch 1 in der Lage ist, dieses Problem zu lösen. Die Heissschmelzklebstoffzusammensetzungen verfügen über ein breites Haftspektrum und führen zu hochbelastbaren Verklebungen, welche äusserst wärmestabil sind. Zudem konnte bei Klebverbunden, welche mit derartigen Heissschmelzklebstoffzusammensetzungen erstellt werden, ein stark reduziertes Kriechverhalten festgestellt werden. Die Heissschmelzklebstoffzusammensetzungen sind aus Arbeitshygienischen und -sicherheitsbedingten Aspekten sehr vorteilhaft.

Weitere Aspekte der vorliegenden Erfindung sind eine Verwendung gemäss Anspruch 12 der Heissschmelzklebstoffzusammensetzung zum Verkleben von Polyolefin-Folien Schäumen oder Textilien, ein Verbundkörper gemäss Anspruch 14 sowie ein Verfahren gemäss Anspruch 17 zur Herstellung eines des Verbundkörpers.

Bevorzugte Ausführungsformen der Erfindung sind Gegenstand der Unteransprüche.

### Wege zur Ausführung der Erfindung

In einem ersten Aspekt betrifft die vorliegende Erfindung eine Heissschmelzklebstoffzusammensetzung, welche
a) mindestens ein thermoplastisches, bei 25°C festes silangepfropftes Poly-α-olefin **(P);** und
b) mindestens ein Weichharz **(WH)** mit einem Schmelzpunkt oder Erweichungspunkt zwischen -10°C und 40°C umfasst.

Die Heissschmelzklebstoffzusammensetzung enthält ein thermoplastisches, silangepfropftes Poly-α-olefin **(P),** welches bei 25°C fest ist.

Bevorzugt weist das silangepfropfte Poly-α-olefin **(P)** eine Erweichungstemperatur zwischen 70°C und 150°C, insbesondere zwischen 80°C und 120°C, bevorzugt zwischen 90°C und 110°C, auf.

Der Erweichungspunkt wird hierbei gemessen durch die Ring & Kugel-Methode, z.B. in Anlehnung an DIN EN 1238.

Derartige silangepfropfte Poly-α-olefine **(P)** sind dem Fachmann bestens bekannt. Sie lassen sich beispielsweise durch eine Aufpfropfung von ungesättigten Silan, wie Vinyltrimethoxysilan, auf ein Poly-α-olefin erhalten. Eine detaillierte Beschreibung zur Herstellung derartiger silangepfropfter Poly-α-olefine sind beispielsweise in US 5,994,747 und DE 40 00 695 A1, deren Inhalt hiermit in die vorliegende Anmeldung mit eingeschlossen ist, offenbart.

Besonders geeignet ist das silangepfropfte Poly-α-olefin **(P)** ein silangepfropftes Polyethylen oder Polypropylen.

Weiterhin bevorzugt als silangepfropfte Poly-α-olefine **(P)** sind silangepfropfte Poly-α-olefine, welche mittels Metallocen-Katalysatoren hergestellte Poly-α-olefine sind, auf welche Silangruppen aufgepfropft wurden. Insbesondere sind derartige silangepfropfte Polypropylen-Homopolymere oder Polyethylen-Homopolymere.

Der Pfropfungsgrad des silangepfropfte Poly-α-olefin **(P)** ist vorteilhaft über 1 Gew.-%, insbesondere über 3 Gew.-%, Silan bezogen auf das Gewicht des Poly-α-olefins. Vorzugsweise beträgt dieser Pfropfungsgrad zwischen 2 und 15 Gew.-%, bevorzugt zwischen 4 und 15 Gew.-%, meist bevorzugt zwischen 8 und 12 Gew.-%. Wenn für das silangepfropfte Poly-α-olefine über Metallocen-Katalysatoren hergestellte Poly-α-olefine verwendet werden, beträgt der Pfropfungsgrad vorzugsweise zwischen 8 und 12 Gew.-%.

Besonders vorteilhaft ist es, wenn die Heissschmelzklebstoffzusammensetzung mindestens zwei verschiedene silangepfropfte Poly-α-olefine **(P)** aufweist.

Der Anteil aller silangepfropften Poly-α-olefine **(P)** beträgt typischerweise über 50 Gew.-%, bevorzugt zwischen 60 und 90 Gew.-%.

Es hat sich gezeigt, dass es vorteilhaft ist, wenn die Heissschmelzklebstoffzusammensetzung weiterhin ein bei Raumtemperatur festes thermoplastisches Poly-α-olefin **(P'),** insbesondere ein ataktisches Poly-α-olefin (APAO), enthält.

Diese ataktischen Poly-α-olefine lassen sich durch Polymerisation von α-Olefinen, insbesondere von Ethen, Propen, 1-Buten beispielsweise mit Ziegler-Katalysatoren herstellen. Es lassen sich Homopolymere oder Copolymere von α-Olefinen herstellen. Sie weisen gegenüber anderen Polyolefinen eine amorphe Struktur auf. Bevorzugt weisen die festen thermoplastischen ataktischen Poly-α-olefine **(P')** einen Erweichungspunkt von über 90°C, insbesondere zwischen 90°C und 130°C auf. Das Molekulargewicht Mₙ beträgt insbesondere zwischen 7'000 und 25'000 g/mol. Es kann vorteilhaft sein, wenn für die Herstellung der ataktischen Poly-α-olefine **(P')** Metallocen-Katalysatoren verwendet werden.

Besonders bevorzugt ist das Gewichtsverhältnis von festem silangepfropften Poly-α-olefin **(P)** zu festem thermoplastischen Poly-α-olefin (P') zwischen 1:1 und 20:1. Als besonders geeignet gezeigt hat sich ein Anteil an festem thermoplastischen Poly-α-olefin **(P')** von 5 bis 40 Gew.-%, bevorzugt 15 bis 35 Gew.-%, bezogen auf die Heissschmelzklebstoffzusammensetzung.

Die Heissschmelzklebstoffzusammensetzung enthält weiterhin mindestens ein Weichharz **(WH)** mit einem Schmelzpunkt oder Erweichungspunkt zwischen -10°C und 40°C. Aufgrund der Tatsache, dass sich das Weichharz **(WH)** bei Raumtemperatur (23°C) sehr nahe am Schmelz- oder Erweichungspunkt befindet, ist es bei Raumtemperatur entweder bereits flüssig oder sehr weich. Ein Weichharz kann ein natürliches Harz oder synthetisches Harz sein.

Insbesondere sind derartige Weichharze **(WH)** mittel- bis höhermolekulare Verbindungen aus den Klassen der Parafin-, Kohlenwasserstoffharze, Polyolefine, Polyester, Polyether, Polyacrylate oder Aminoharze.

Das Weichharz **(WH)** weist vorzugsweise einen Schmelzpunkt oder Erweichungspunkt zwischen 0°C und 25°C, insbesondere 10°C und 25°C, auf.

In einer, bevorzugten, Ausführungsform ist das Weichharz **(WH)** ein Kohlenwasserstoffharz, insbesondere ein aliphatisches C₅-C₉-Kohlenwasserstoffharz ist.

Besonders geeignet als Weichharz **(WH)** hat sich ein aliphatisches C₅-Kohlenwasserstoffharz gezeigt, welches unter dem Handelsnamen Wingtack® 10 von der Firma Cray Valley kommerziell vertrieben wird.

Weitere geeignete Weichharze sind beispielsweise Polyterpenharze, wie sie beispielsweise als Sylvares® TR A25 von Arizona Chemical, USA, kommerziell vertrieben werden, Rosinester und Tallharzester, wie sie beispielsweise als Sylvatac® RE 12, Sylvatac® RE 10, Sylvatac® RE 15, Sylvatac® RE 20, Sylvatac® RE 25 oder Sylvatac® RE 40 von Arizona Chemical, USA, kommerziell vertrieben werden.

Weitere geeignete Weichharze sind beispielsweise Escorez™ 5040 (Exxon Mobil Chemical).

Als Weichharze weiter geeignete Kohlenwasserstoffharze sind beispielsweise Picco A10 (Eastman Kodak) und Regalite R1010 (Eastman Kodak).

Der Anteil aller Weichharze **(WH)** beträgt typischerweise 20 - 40 Gew.-%, insbesondere 25 und 35 Gew.-%, bezogen auf die Heissschmelzklebstoffzusammensetzung.

Es hat sich zudem gezeigt, dass es vorteilhaft ist, wenn das Gewichtsverhältnis aller Weichharze **(WH)** zu allen silangepfropften Poly-α-olefinen **(P)** kleiner als 0.5 ist. Bevorzugt ist dieses Gewichtsverhältnis zwischen 0.2 und 0.4 und meist bevorzugt zwischen 0.3 und 0.4.

Die Heissschmelzklebstoffzusammensetzung kann bei Bedarf zusätzlich weitere thermoplastische Polymere aufweisen. Dies sind insbesondere thermoplastische Polyester (TPE), thermoplastische Polyurethane (TPU) sowie Homo- oder Copolymere von mindestens einem Monomer, welches ausgewählt ist aus der Gruppe bestehend aus Ethylen, Propylen, Butylen, Isobutylen, Isopren, Vinylacetat, Vinylester höherer Carbonsäuren und Ester der (Meth)acrylsäure. Insbesondere geeignet als derartiges zusätzliches thermoplastisches Polymer sind Ethylenvinylacetat-Copolymere (EVA). Selbstverständlich können auch diese thermoplastischen Polymere gepfropft sein.

Die Heissschmelzklebstoffzusammensetzung enthält weiterhin bevorzugt mindestens einen Katalysator, welcher die Reaktion von Silangruppen katalysiert, insbesondere in einer Menge von 0.01 - 1.0 Gew.-%, bevorzugt von 0.01 - 0.5 Gew.-%, bezogen auf die Heissschmelzklebstoffzusammensetzung. Als derartige Katalysatoren gelten insbesondere Zinn-organische Verbindung, bevorzugt Dibutylzinndilaurat (DBTL).

Weiterhin kann die Heissschmelzklebstoffzusammensetzung weitere Bestandteile aufweisen. Als weitere Bestandteile geeignet sind insbesondere Bestandteile, welche ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel.

Es hat sich jedoch gezeigt, dass es besonders vorteilhaft ist, wenn die Gewichtssumme aller thermoplastischen, bei 25°C festen silangepfropften Poly-α-olefine **(P)** und aller Weichharze **(WH)** und aller gegebenenfalls vorhandenen festen thermoplastischen Poly-α-olefine **(P')** mehr als 80 Gew.-%, bevorzugt mehr als 90 Gew.-%, der Heissschmelzklebstoffzusammensetzung beträgt.

Als besonders vorteilhaft haben sich Heissschmelzklebstoffzusammensetzungen erwiesen, welche im Wesentlichen aus thermoplastischem, bei 25°C festen silangepfropften Poly-α-olefin **(P),** Weichharz **(WH),** gegebenenfalls festem thermoplastischen Poly-α-olefin **(P'),** sowie Katalysator, welcher die Reaktion von Silangruppen katalysiert, bestehen.

Unter dem Einfluss von Wasser, insbesondere in Form von Luftfeuchtigkeit, hydrolysieren die Silangruppen des silangepfropften Poly-α-olefins **(P),** zu Silanolgruppen (-SiOH), welche ihrerseits miteinander reagieren und so unter Bildung von Siloxangruppen (-Si-O-Si-) zur Vernetzung der Heissschmelzklebstoffzusammensetzung führen. Derartige Heissschmelzklebstoffzusammensetzungen werden als reaktive Heissschmelzklebstoffe bezeichnet.

Es ist deshalb vorteilhaft, darauf zu achten, dass zur Herstellung der Heissschmelzklebstoffzusammensetzung Rohstoffe verwendet die möglichst gut getrocknet sind und dass die Klebstoffe während der Herstellung, Lagerung und Applikation möglichst vor dem Kontakt mit Wasser oder Luftfeuchtigkeit geschützt werden.

Grundsätzlich erfolgt die Herstellung auf übliche, dem Fachmann für Heissschmelzklebstoffe bekannte, Art und Weise.

Die Heissschmelzklebstoffzusammensetzungen werden durch Aufheizen verflüssigt, indem sich die thermoplastischen Inhaltsstoffe aufschmelzen. Die Viskosität der Heissschmelzklebstoffzusammensetzungen sollte angepasst sein auf die Applikationstemperatur. Typischerweise ist die Applikationstemperatur 100 bis 200 °C. Bei dieser Temperatur ist der Klebstoff gut verarbeitbar. Die Viskosität beträgt vorzugsweise in diesem Temperaturbereich 1'500 - 50'000 mPas. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche wegläuft, bevor er aufgrund des Abkühlens sich verfestigt.

Das durch die Abkühlung erfolgende Erstarren und Verfestigen des Klebstoffes bewirkt einen schnellen Festigkeitsaufbau und hohe Anfangshaftfestigkeit eines Klebverbundes. Es ist bei der Verwendung eines Klebstoffes darauf zu achten, dass das Verkleben innerhalb der Zeit erfolgt, in der der Klebstoff noch nicht zu stark abgekühlt ist, d.h. das Verkleben muss erfolgen, so lange der Klebstoff noch flüssig, bzw. zumindest noch klebrig und verformbar, ist. Zusätzlich zu dieser physikalischen Art der Verfestigung wird der Klebstoff auch nach dem Erkalten durch den Einfluss von Wasser, insbesondere von Luftfeuchtigkeit weitervernetzen und so innert einer kurzen Zeit von typischerweise wenigen Stunden oder Tage weiter an mechanischer Festigkeit gewinnen. Im Gegensatz zu den nicht reaktiven Heissschmelzklebstoffzusammensetzungen lassen sich reaktive Heissschmelzklebstoffzusammensetzungen nicht reversibel erhitzen und dadurch wieder verflüssigen. Somit ist der Einsatz derartiger Klebstoffe insbesondere für solche Anwendungen vorteilhaft, in welchen der verklebte Verbundkörper im Laufe seines Gebrauches, bzw. Lebens, in Kontakt mit hohen Temperaturen kommt ohne dass die Verklebung Schaden nimmt. Ebenso ist der Einsatz von derartigen Heissschmelzklebstoffen dahin gehend vorteilhaft, dass durch die Vernetzung bedingt, derartige Klebstoffe bedeutend weniger kriechen.
Es hat sich gezeigt, dass die beschriebenen erfindungsgemässen Heissschmelzklebstoffzusammensetzungen auch in dünnen Schichten über eine verlängerte Offenzeit, d.h. eine Offenzeit von typischerweise mehreren, insbesondere von 3 bis 10, Minuten aufweisen, während der ein Fügen mit einem Fügepartner möglich ist. Der Klebstoff ist in der Lage, während der Offenzeit die Oberflächen der Fügepartner gut zu benetzen. Zudem baut sich schnell eine Frühfestigkeit auf, welche es erlaubt, dass der gebildete Klebverbund innert kurzer Zeit in der Lage ist Kräfte zu einem gewissen Mass zu übertragen. Als dünne Schichten werden in dem vorliegenden Dokument Klebstoffschichtdicken von weniger als 1 mm, typischerweise von 0.05 bis 0.5 mm, insbesondere um 0.1 mm, verstanden. Durch die Wasser-bedingte Vernetzungsreaktion lassen sich schliesslich sehr hohe Endfestigkeiten erreichen, welche typischerweise 1 bis 2 MPa betragen.

Die beschriebenen erfindungsgemässen Heissschmelzklebstoffzusammensetzungen sind durch die Abwesenheit von Isocyanaten aufgrund von Aspekten der Arbeitshygiene und -sicherheit besonders vorteilhaft.

Sie weisen zudem ein äusserst breites Haftspektrum auf. Insbesondere lassen sich vielfach auch unpolare Kunststoffe, wie Polyethylen oder Polypropylen, ohne Primer verkleben.

Insbesondere ist durch die verlängerte Offenzeit ein im Stand der Technik vielfach benötigtes "Reaktivieren" (Wiederaufschmelzen) des Klebstoffs vor dem Fügen mit der Oberfläche des Fügepartners nicht mehr nötig. Dies führt zu einem stark vereinfachten Klebeprozess, was selbstverständlich zusätzlich auch finanziellen Anreiz schafft, den erfindungsgemässen Klebstoff einzusetzen.

Es hat sich zudem gezeigt, dass die beschriebenen Heissschmelzklebstoffzusammensetzungen sehr lagerstabil sind, über gute Verarbeitungseigenschaften, insbesondere im Applikationstemperaturbereich von 100 bis 200°C, aufweisen und bei diesen Temperaturen auch über längere Zeit viskositätsstabil sind. Die Aushärtung erfolgt geruchsfrei, schnell und auch bei dickschichtigen Anwendungen ohne Blasen. Der Klebstoff zeichnet sich über gute Haftung und eine gute Beständigkeit gegenüber Umwelteinflüssen aus.

Es hat sich somit gezeigt, dass die vorgängig beschriebenen Heissschmelzklebstoffzusammensetzungen bestens zum Verkleben von Polyolefin-Folien oder Schäumen oder Textilien verwendet werden können.

Insbesondere bevorzugt werden sie als Kaschierklebstoffe zum Verkleben von Polyolefin-Folien oder Schäumen oder Textilien verwendet.

Weiterhin sind die Heissschmelzklebstoffzusammensetzungen auch sehr gut geeignet um Sandwich Panels zu kleben.

Ein weiterer Aspekt der Erfindung betrifft einen Verbundkörper, welche erstes Substrat **(S1),** welches eine Polyolefin-Folie oder ein Schaumstoff oder ein Textil ist, eine vorgängig beschriebene Heissschmelzklebstoffzusammensetzung **(K),** bzw. eine durch den Einfluss von Wasser vernetzte vorgängig beschriebene Heissschmelzklebstoffzusammensetzung **(K'),** sowie ein zweites Substrat **(S2)** aufweisen.

Hierbei ist die Heissschmelzklebstoffzusammensetzung, bzw. die vernetzte Heissschmelzklebstoffzusammensetzung, zwischen ersten Substrat **(S1)** und zweiten Substrat **(S2)** angeordnet.

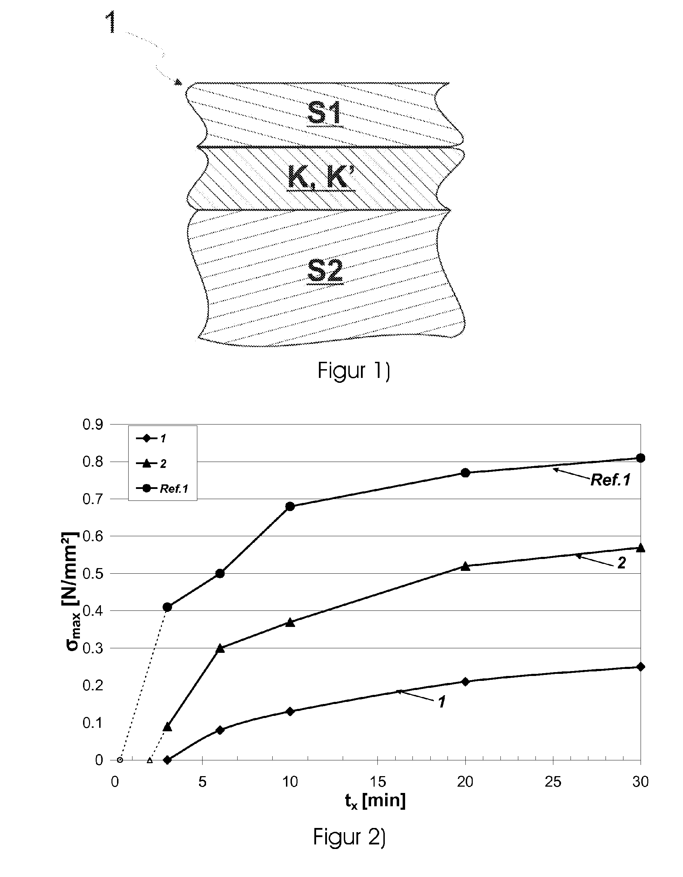

Figur 1 stellt schematisch einen derartigen Verbundkörper (1) dar, welcher ein erstes Substrat **(S1)** und ein zweites Substrat **(S2)** sowie eine Heissschmelzklebstoffzusammensetzung **(K),** bzw. eine durch den Einfluss von Wasser vernetzte Heissschmelzklebstoffzusammensetzung **(K'),** welche zwischen erstem und zweiten Substrat angeordnet ist und so diese zwei Substrate miteinander verklebt.

Als "Polyolefin-Folie" werden insbesondere biegsame flächige Polyolefine in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Polyolefin-Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass auch Polyolefin-Folien auch noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden auch derartige Folien als Polyolefin-Folien bezeichnet, welche nicht zu 100% aus Polyolefinen bestehen.

Das zweite Substrat **(S2),** vielfach auch als Träger bezeichnet, kann von verschiedener Art und Natur sein. Die Substrate können beispielsweise aus Kunststoffen, insbesondere Polyolefine oder ABS, Metall, lackiertem Metall, aus Kunststoff, Holz, Holzwerkstoffen oder Fasermaterialien sein. Das Substrat ist vorzugsweise ein fester, geformter Körper.

Insbesondere handelt es sich beim zweiten Substrat **(S2)** um ein Fasermaterial, insbesondere ein Naturfasermaterial.

Weiterhin bevorzugt ist das zweite Substrat zweite Substrat **(S2)** ein Polypropylen.

Bei Bedarf kann die Oberfläche des zweiten Substrates **(S2)** vorbehandelt sein. Insbesondere kann eine derartige Vorbehandlung ein Reinigen oder ein Auftragen eines Primers darstellen. Bevorzugt ist jedoch das Aufbringen von Primern nicht notwendig.

Der beschriebene Verbundkörper ist vorzugsweise ein Artikel der industriellen Fertigung, insbesondere ein Artikel für den Innenausbau, bevorzugt ein Einbauteil in ein Transportmittel oder ein Artikel der Möbelbranche.

Besonders wichtig ist der Einsatz der für die Herstellung von Innenauskleidungsteilen von Fahrzeugen, insbesondere von Automobilen. Bespiele für derartige Innenauskleidungsteile sind Türseitenteile, Schalttafeln, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen.

Ein weiterer Aspekt der vorliegenden Erfindung ist auch ein Verfahren zur Herstellung eines Verbundwerkstoffs, wie er soeben beschrieben worden ist. Dieses Verfahren umfasst die Schritte
(i) Aufschmelzen einer vorgängig beschriebenen Heissschmelzklebstoffzusammensetzung
(ii) Applizieren der geschmolzenen Heissschmelzklebstoffzusammensetzung auf eine Polyolefin-Folie **(S1)**
(iii) Erwärmen der Polyolefin-Folie
(iv) Kontaktieren des zweiten Substrates **(S2)** mit der aufgeschmolzenen Heissschmelzklebstoffzusammensetzung.

Hierfür wird insbesondere ein Vakuumtiefziehverfahren oder eine Presskaschierung im Siegelverfahren verwendet.

Beim Vakuumtiefziehverfahren wird die Polyolefin-Folie **(S1)** (Dekor aus luftundurchlässigem Material) typischerweise in einem Rahmen luftdicht eingespannt. Unterhalb der Folie befindet sich eine Unterform auf die der Träger gelegt wird. Unterform und Träger sind durchbohrt beziehungsweise luftdurchlässig. Das Gerät ist unterwärts weiter luftdicht abgeschlossen. Beim Absaugen der Luft aus dieser Vorrichtung schmiegt sich nun das Dekormaterial unter dem auf seine Oberfläche lastenden atmosphärischen Druck passgenau auf das Trägerteil. Das Dekormaterial wird vor dem Anlegen des Vakuums, bzw. Unterdruckes, erhitzt. Das Dekormaterial ist wegen des zu erzeugenden Vakuums, bzw. Unterdruckes, luftundurchlässig

Durch das Erhitzen der Polyolefin-Folie **(S1)** wird die Folie weich und kann sich der Geometrie des Trägers anpassen, ohne dass Falten entstehen.

Die hier benutzten Polyolefin-Folien sind vielfach Dekorfolien und weisen eine Oberflächenstruktur auf. Diese Oberflächenstruktur auf der Kunststofffolie kann beispielsweise vor oder während oder nach dem Verkleben eingeprägt werden.

Besonders vorteilhaft hierbei ist, dass der Klebstoff direkt auf die Polyolefin-Folie appliziert werden kann und nicht auf den Träger, wie dies zum Beispiel bei Polyurethandispersionsklebstoffen der Fall ist.

Somit erfolgt der Schritt des Kontaktierens insbesondere unter einem Anpressdruck, insbesondere zwischen 0.1 bar und 1 bar, bevorzugt mindestens 0.8 bar, (entsprechend einem Anlegen eines Vakuums von bis zu 0.9 bar, bevorzugt von mindestes 0.2 bar) erfolgt.

Der Anpressdruck erfolgt vorzugsweise durch ein Anlegen eines Unterdruckes im Raum zwischen zweiten Substrat **(S2)** und Polyolefin-Folie **(S1)** erzeugt wird. Der oben erwähnte Anpressdruck kommt deshalb insbesondere durch ein Anlegen eines Unterdruckes von bis zu 0.9 bar, bevorzugt von mindestes 0.2 bar) zustande.

Der Schritt des Kontaktierens erfolgt vorzugsweise bei einer Klebstofftemperatur von 50°C oder mehr, insbesondere eine Temperatur zwischen 50 und 200°C, bevorzugt zwischen 100 und 150°C.

Beim Presskaschierungsverfahren wird die aufgeschmolzene Heissschmelzklebstoffzusammensetzung entweder auf dem Träger und/oder der Oberfläche des Schaumstoffs oder Textils **(S1)**(Dekor) aufgetragen. Die Verklebung vom Träger mit dem Dekor erfolgt allenfalls unter Wärmeeinfluss unter Fügen und Pressen.

### Beispiele

**Tabelle 1. Charakterisierung der verwendeten Rohstoffe und deren Bezeichnung**

| | |
|---|---|
| ***P1*** | silangepfropftes Poly-α-olefin, |
| | Molekulargewicht (Mn): 10'600 g/mol, |
| | Schmelzviskosität (190°C, DIN 53 019): 5'000 mPa.s, |
| | Erweichungstemperatur (Ring & Kugel): 98°C |
| ***P2*** | Silangepfropftes Poly(propylen/ethylen) (Poly)-α-olefin) (durch Metallocen-Katalyse erhalten) |
| | Schmelzviskosität (170°C DIN 53 018): ca. 100 mPa.s, |
| | Erweichungstemperatur (Ring & Kugel): 100°C |
| | Tropfpunkt: ca. 80°C |
| | Dichte: ca. 0.90 g/cm³ |
| | Silangehalt: ca.10 Gew.-% (Pfropfungsmittel:Vinyltriethoxysilan) |

Es wurden Klebstoffzusammensetzungen hergestellt, indem die Inhaltsstoffe gemäss den in Tabelle 2 angegebenen Gewichtsteilen miteinander bei einer Temperatur von 150°C und unter Inertatmosphäre in einem Rührwerk vermengt wurden.

### Viskosität

Nach dem Aufschmelzen des jeweiligen Heissschmelzklebstoffes in einer verschlossenen Tube während 20 Minuten bei 140°C im Wärmeschrank wurden 9,7 g Klebstoff in eine Einweghülse abgewogen und während 20 Minuten im Viskosimeter bei der jeweiligen in Tabelle 2 angegebenen Temperatur temperiert. Die Messung der Viskosität erfolgte bei 130°C, bzw. 190°C, bei 10 Umdrehungen pro Minute auf einem Brookfield DV-2 Thermosel Viskosimeter mit Spindel Nr. 27. Als Viskosität wird derjenige Wert ausgewählt, der sich nach 5 Minuten Messung einstellt. In Tabelle 2 wird der gemessene Wert bei 130°C als "Visk₁₃₀" und bei 190°C als "Visk₁₉₀" angegeben.

### Frühfestigkeitsaufbau

Der Heissschmelzklebstoff wurde aufgeschmolzen und bei einer Klebstofftemperatur von 140 °C auf PP-Prüfkörper (100 mm x 25 mm x 5 mm)) appliziert und mit einem zweiten PP-Prüfkörper gefügt, Klebstoffdicke: 1 mm, Überlappungsfläche: 25 mm x 25 mm). Die Frühfestigkeit wurde durch Messung dieser Zugscherfestigkeitsprüfkörper nach unterschiedlichen Zeiten (*tₓ*), gemessen ab Auftrag des geschmolzenen Klebstoffs, mittels einer Zwick Zug-Prüfmaschine Z020 mit einer Messgeschwindigkeit von 10 mm/min bei 23°C und 50% rel. Luftfeuchtigkeit gemessen. In Tabelle 2 sind die gemessenen Maximalspannungen ("σₘₐₓ") nach der Zeit *tₓ* angegeben. Aus praktischen Gründen konnten mit dieser Methode keine Messungen unter 3 Minuten (*tₓ*) durchgeführt werden.

In Figur 2 sind die Frühfestigkeitsaufbau-Kurven als maximale Spannung (σ*ₘₐₓ)* versus Zeit nach Auftrag des Klebstoffs (*tₓ*) der Beispiele ***1*** und ***2*** sowie des Vergleichsbeispiels ***Ref. 1*** aufgezeigt. Die Teile der Kurven, welche gestrichelt sind, sowie die Punkte unter 3 Minuten sind aus der bestehenden Kurve heraus extrapoliert worden.

### Offenzeit

Der Heissschmelzklebstoff wurde auf 140°C aufgeschmolzen, etwa 20 g mittels Rakel in einer Schichtdicke von 500 µm und 60 mm Breite auf der silikonisierten Seite eines auf einer Heizplatte der Temperatur von 150°C liegenden Silikonisierten Papiers (B700 weiss, Laufenberg & Sohn, Deutschland) als Streifen von etwa 30 cm aufgetragen. Unmittelbar nach dem Klebstoff-Auftrag wurde das so beschichtete Papier auf eine bei 23°C konditionierte Buchenholzplatte gelegt. Nach regelmässigen Zeitabständen (*"t_{y}"*) von 30 Sekunden wurde nun ein Streifen (10 cm x 1 cm) des silikonisierten Papiers mit der Papierseite auf den Klebstoff aufgelegt, mit dem Finger kurz angepresst und langsam wieder abgezogen. Das Ende der Offenzeit wurde als diejenige Zeit, gemessen vom Zeitpunkt des Klebstoffauftrags, bestimmt, bei welcher der Klebstoff nicht mehr auf dem Deck-Papier haften bleibt.

### Erweichungspunkt

Der Erweichungspunkt wurde nach der Ring & Kugel-Methode, gemäss DIN EN 1238. gemessen.

**Tabelle 2 Heissschmelzklebstoffzusammensetzungen**

| | ***1*** | ***2*** | ***Ref.1*** |
|---|---|---|---|
| ***P1*** | 65.0 | 65.0 | 65.0 |
| ***P2*** | 10.0 | 10.0 | 10.0 |
| Wingtack® 10 (Erweichungspunkt: 10°C) | 25.0 | 0 | 0 |
| Sylvatac® RE 12 (Erweichungspunkt: 10°C) | 0 | 25.0 | 0 |
| Dibutylzinndilaurat | 0.05 | 0.05 | 0.05 |
| Offenzeit [min] | 3 | 2 | 0.5 |
| Erweichungspunkt [°C] | 88 | 92 | 94 |
| Visk₁₃₀ [Pas] | 8.0 | 20.5 | 21.5 |
| Visk₁₉₀ [Pas] | 1.6 | 5.2 | 3.8 |
| σₘₐₓ (3 min) [N/mm²] | 0.00 | 0.09 | 0.41 |
| σₘₐₓ (6 min) [N/mm²] | 0.08 | 0.30 | 0.50 |
| σₘₐₓ (10 min) [N/mm²] | 0.13 | 0.37 | 0.68 |
| σₘₐₓ (20 min) [N/mm²] | 0.21 | 0.52 | 0.77 |
| σₘₐₓ (30 min) [N/mm²] | 0.25 | 0.57 | 0.81 |

Es ist hierbei aus den Resultaten der Tabelle 2 und der Figur 2 ersichtlich, dass die Beispiele ***1*** und ***2*** eine bedeutend längere Offenzeit aufweisen, als das entsprechende Vergleichsbeispiel ***Ref.1**.* Die Beispiele zeigen einen schnellen Festigkeitsaufbau. Alle Klebstoffe weisen zudem nach ihrer Vernetzung eine vergleichbare Endfestigkeit auf.

## Patentansprüche

1. Heissschmelzklebstoffzusammensetzung umfassend
a) mindestens ein thermoplastisches, bei 25°C festes silangepfropftes Poly-α-olefin **(P);**
b) mindestens ein Weichharz **(WH)** mit einem Schmelzpunkt oder Erweichungspunkt zwischen -10°C und 40°C.

2. Heissschmelzklebstoffzusammensetzung gemäss Anspruch 1, **dadurch gekennzeichnet, dass** das silangepfropfte Poly-α-olefin **(P)** eine Erweichungstemperatur zwischen 70°C und 150°C, insbesondere zwischen 80°C und 120°C, bevorzugt zwischen 90°C und 110°C, aufweist.

3. Heissschmelzklebstoffzusammensetzung gemäss Anspruch 1 oder 2,
**dadurch gekennzeichnet, dass** das silangepfropfte Poly-α-olefin **(P)** ein silangepfropftes Polyethylen oder Polypropylen ist.

4. Heissschmelzklebstoffzusammensetzung gemäss einem der vorhergehenden Ansprüche, **dadurch gekennzeichnet, dass** das silangepfropfte Poly-α-olefin **(P)** ein mittels Metallocen-Katalysatoren hergestelltes Poly-α-olefin ist, auf welches Silangruppen aufgepfropft wurden.

5. Heissschmelzklebstoffzusammensetzung gemäss einem der vorhergehenden Ansprüche, **dadurch gekennzeichnet, dass** die Zusammensetzung weiterhin ein bei Raumtemperatur festes thermoplastisches Poly-αolefin **(P'),** insbesondere ein ataktisches Poly-α-olefin (APAO), enthält.

6. Heissschmelzklebstoffzusammensetzung gemäss einem der vorhergehenden Ansprüche, **dadurch gekennzeichnet, dass** die Zusammensetzung mindestens zwei verschiedene silangepfropfte Poly-α-olefine **(P)** aufweist.

7. Heissschmelzklebstoffzusammensetzung gemäss einem der vorhergehenden Ansprüche, **dadurch gekennzeichnet, dass** das Weichharz **(WH)** einem Schmelzpunkt oder Erweichungspunkt zwischen 0°C und 25°C, insbesondere 10°C und 25°C, aufweist.

8. Heissschmelzklebstoffzusammensetzung gemäss einem der vorhergehenden Ansprüche, **dadurch gekennzeichnet, dass** das Weichharz **(WH)** ein Kohlenwasserstoffharz, insbesondere ein aliphatisches C₅-C₉-Kohlenwasserstoffharz ist.

9. Heissschmelzklebstoffzusammensetzung gemäss einem der vorhergehenden Ansprüche, **dadurch gekennzeichnet, dass** das die Menge an Weichharz **(WH)** 20 - 40 Gew.-%, insbesondere 25 und 35 Gew.-%, bezogen auf die Heissschmelzklebstoffzusammensetzung beträgt.

10. Heissschmelzklebstoffzusammensetzung gemäss einem der vorhergehenden Ansprüche, **dadurch gekennzeichnet, dass** das Gewichtsverhältnis aller Weichharze **(WH)** zu allen silangepfropften Poly-α-olefinen **(P)** kleiner als 0.5 ist, bevorzugt zwischen 0.2 und 0.4, meist bevorzugt zwischen 0.3 und 0.4; ist.

11. Heissschmelzklebstoffzusammensetzung gemäss einem der vorhergehenden Ansprüche, **dadurch gekennzeichnet, dass** die Gewichtssumme aller thermoplastischen, bei 25°C festen silangepfropften Poly-α-olefine **(P)** und aller Weichharze **(WH)** und aller gegebenenfalls vorhandenen festen thermoplastischen Poly-α-olefine **(P')** mehr als 80 Gew.-%, bevorzugt mehr als 90 Gew.-%, der Heissschmelzklebstoffzusammensetzung beträgt.

12. Verwendung einer Heissschmelzklebstoffzusammensetzung gemäss einem der Ansprüche 1 bis 11 zum Verkleben von Polyolefin-Folien oder Schäumen oder Textilien.

13. Verwendung einer Heissschmelzklebstoffzusammensetzung gemäss einem der Ansprüche 1 bis 11 als Kaschierklebstoff zum Verkleben von Polyolefin-Folien oder Schäumen oder Textilien.

14. Verbundkörper (1) aufweisend
- ein erstes Substrat **(S1),** welches eine Polyolefin-Folie oder ein Schaumstoff oder ein Textil ist;
- eine Heissschmelzklebstoffzusammensetzung gemäss einem der Ansprüche 1 bis 11, bzw. eine durch den Einfluss von Wasser vernetzte Heissschmelzklebstoffzusammensetzung gemäss einem der Ansprüche 1 bis 11, sowie
- ein zweites Substrat **(S2);**
wobei der die Heissschmelzklebstoffzusammensetzung, bzw. die vernetzte Heissschmelzklebstoffzusammensetzung, zwischen erstem Substrat **(S1)** und Substrat **(S2)** angeordnet ist

15. Verbundkörper gemäss Anspruch 14, **dadurch gekennzeichnet, dass** das zweite Substrat **(S2)** ein Fasermaterial, insbesondere ein Naturfasermaterial ist.

16. Verbundkörper gemäss Anspruch 14, **dadurch gekennzeichnet, dass** das zweite Substrat **(S2)** ein Polypropylen ist.

17. Verfahren zur Herstellung eines Verbundkörpers gemäss einem der Ansprüche 14 bis 16 umfassend die Schritte
(i) Aufschmelzen einer Heissschmelzklebstoffzusammensetzung gemäss einem der Ansprüche 1 bis 11
(ii) Applizieren der geschmolzenen Heissschmelzklebstoffzusammensetzung auf eine Polyolefin-Folie **(S1)**
(iii) Erwärmen der Polyolefin-Folie
(iv) Kontaktieren des zweiten Substrates **(S2)** mit der aufgeschmolzenen Heissschmelzklebstoffzusammensetzung.

18. Verfahren gemäss Anspruch 17, **dadurch gekennzeichnet, dass** der Schritt des Kontaktierens unter einem Anpressdruck, insbesondere zwischen 0.1 bar und 1 bar, bevorzugt mindestens 0.8 bar, erfolgt.
